# DEMANDE DE BREVET EUROPEEN

(11) **EP 1 392 070 A1**
(43) Date de publication de la demande: **25.02.2004**
(21) Numéro de dépôt: 03102308.8
(22) Date de dépôt: 25.07.2003
(51) Int. Cl.: H04Q 7/32

(54) **Procédé de verrouillage d'un téléphone mobile**

(30) Priorité: 12.08.2002 FR 0210239
(71) Demandeur: SAGEM SA, 75015 Paris (FR)
(72) Inventeur: Romao, Fernando, 78360 Montesson (FR); Heurtaux, Frédéric, 13610 Le Puy Ste Réparade (FR)
(74) Mandataire: Schmit, Christian Norbert Marie

(57) **Abrégé**

Pour résoudre un problème d'utilisation de téléphone mobile (1) par des personnes soucieuses de ne pas lancer intempestivement des communications hasardeuses, on prévoit de munir le téléphone d'une fonction (20, 23) de verrouillage du clavier. Alors que le verrouillage du clavier par une paramétrisation comportant une séquence de touches est connu, on prévoit dans l'invention que, lors d'une mise en service du téléphone mobile celui-ci soit automatiquement placé dans un état où le verrouillage du clavier est activé. En agissant ainsi, on rend l'utilisation du verrouillage du clavier plus efficace et plus sereine.

## Description

La présente invention a pour objet un procédé d'utilisation d'un téléphone mobile. Elle est plus particulièrement destinée à améliorer les conditions d'utilisation d'un téléphone mobile de type GSM, encore que toutes les normes pourraient être concernées.

Un téléphone mobile comporte dans son principe, dans un boîtier, un émetteur/récepteur commandé par un microprocesseur à l'aide d'un clavier, et le plus souvent un écran pour surveiller les différentes actions entreprises.

Un téléphone mobile est destiné à être transporté, souvent dans une poche intérieure d'une veste ou d'un autre vêtement. Les utilisateurs dont les vêtements sont dépourvus de poche, en particulier les femmes, prennent l'habitude de placer leur téléphone mobile dans leur sac, là où se trouvent également rangés de nombreux autres objets tels que des clefs ou des boîtiers durs. Autant dans une poche, lorsqu'en général les utilisateurs sont des hommes, le risque de composer de manière intempestive un numéro d'appel alors que le téléphone est simplement en veille est très faible, autant ce risque est important lorsque le téléphone mobile est contenu dans un sac, et lorsque ce sac est secoué, par exemple au cours d'une promenade de l'utilisateur.

Pour empêcher cette composition intempestive de numéro, synonyme de contrariété voire de dépense inutile, deux systèmes ont été imaginés, notamment à la demande des utilisatrices. Un premier système consiste à munir les téléphones mobiles d'un volet de fermeture permettant de masquer le clavier (et dans certains cas l'écran). Une telle solution présente cependant l'inconvénient que le volet rabattable, ou coulissant, est un accessoire supplémentaire qui augmente le poids et le prix du téléphone mobile.

En variante, il a alors été imaginé des solutions de blocage d'utilisation du téléphone mobile dite de blocage du clavier. Dans de telles solutions, l'utilisation du téléphone mobile est verrouillée (on dit que son clavier est verrouillé mais c'est un abus de langage). L'utilisateur peut déverrouiller l'utilisation de son téléphone mobile en composant une séquence de touches. Dans un exemple cette séquence de touches est la séquence * et OK. En théorie ce dernier système devrait fonctionner correctement sans coût supplémentaire. Or on constate qu'il est peu demandé par les consommatrices, qui représente la clientèle visée par ce type de protection.

On a pu déterminer dans l'invention que ces rejets d'un tel système étaient provoqués par le fait que le choix du verrouillage d'utilisation du téléphone mobile par l'utilisateur nécessitait d'une démarche de paramétrisation du téléphone mobile. Dans ce but, l'utilisateur est amené à parcourir les différents menus du téléphone mobile, voire à consulter la notice (volumineuse) d'utilisation de ce téléphone mobile. Une fois lancé le programme de paramétrisation adéquat, l'utilisateur, et en particulier l'utilisatrice, peuvent choisir un verrouillage du clavier pour se retrouver dans cette situation de sécurité.

Compte tenu de la faible durée de vie d'utilisation d'un téléphone mobile, et compte tenu des changements fréquents d'appareils par les utilisateurs, on constate que les utilisatrices continuent à se déterminer pour les appareils munis de volet et ne choisissent pas la solution (moins coûteuse) de verrouillage de l'utilisation.

Dans l'invention, on a résolu ce problème de la sécurité d'utilisation du téléphone mobile en prévoyant que, lors d'une mise en service, le téléphone mobile est mis automatiquement dans une situation où l'option de verrouillage d'utilisation (on parlera par la suite de verrouillage du clavier) est automatiquement choisie et imposée. Autrement dit, plutôt que de demander l'utilisatrice de positivement se mettre dans une situation où son clavier sera verrouillé, on demande à l'utilisatrice de, positivement, se mettre dans une situation où son clavier sera déverrouillé, si c'est de cette façon là qu'elle compte utiliser son appareil. On s'est rendu compte alors sur un usage interne que ce mode de préparation à l'utilisation des téléphones mobiles était préféré par les utilisateurs.

On verra par la suite comment ce changement de conception de l'utilisation conduit par ailleurs à modifier sensiblement l'ergonomie d'utilisation des téléphones mobiles, notamment lorsque surviennent des appels entrants, ou aussi lorsque l'utilisateur décide d'arrêter son téléphone mobile et de le remettre en service.

L'invention a donc pour objet un procédé de paramétrage d'un téléphone mobile dans lequel
- on munit le téléphone mobile d'une option de verrouillage d'utilisation,
- on choisit de mettre en oeuvre ou non cette option par une action,
- on enregistre dans une mémoire du téléphone mobile un état représentatif de ce choix,
caractérisé en ce que
- lors de la mise en service du téléphone, l'état enregistré dans une mémoire non volatile correspond à un choix de mettre en oeuvre effectivement le verrouillage d'utilisation.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un téléphone mobile utilisable pour mettre en oeuvre le procédé de l'invention ;
- Figure 2 : une représentation schématique d'étapes exécutées par un logiciel contenu dans le téléphone mobile pour proposer une utilisation conforme à l'invention.

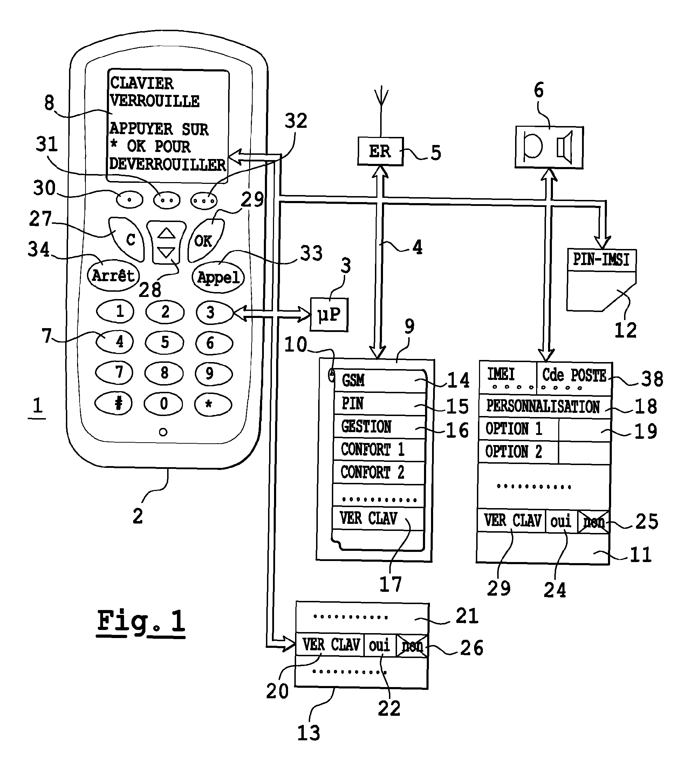

La figure 1 montre un téléphone mobile 1 utilisable pour mettre en oeuvre le procédé de l'invention. Ce téléphone 1 comporte d'une manière classique un boîtier 2 pour maintenir un microprocesseur 3 en relation, par l'intermédiaire d'un bus 4 de données, d'adresses et de commande, avec un émetteur/récepteur 5 de communications radio mobiles, des circuits 6 de traitement de signaux de paroles, tant en émission acoustique qu'en réception acoustique, un clavier de commande 7, et un écran 8. Pour son fonctionnement, le microprocesseur 3 prélève dans une mémoire programme 9 un programme d'utilisation 10 comportant de nombreux sous-programmes. Par ailleurs, le microprocesseur 3 est en relation avec une mémoire de données 11 du téléphone mobile, ainsi que, dans le cadre du GSM en particulier, avec une mémoire amovible 12. Les mémoires 11 et 12 sont de préférence des mémoires non volatiles, dont les cellules mémoires sont des cellules EPROM ou EEPROM. Pour son travail effectif, le microprocesseur 3 peut être en relation par ailleurs avec une mémoire de travail 13 de type statique ou dynamique, particulièrement rapide, mais volatile.

Pour son fonctionnement, le téléphone mobile prélève dans le programme 10 un sous-programme 14, intitulé ici GSM dans un exemple, permettant de gérer toutes les opérations classiques du téléphone mobile 1 et ses communications avec une station de base d'un opérateur.

En général la mise en connexion du téléphone 1 avec cette station de base peut résulter d'un sous-programme de reconnaissance 15, intitulé ici PIN, comportant dans son essence deux opérations distinctes. Premièrement le sous-programme 15 prélève dans la mémoire amovible 12 une information dite IMSI permettant à l'opérateur de repérer quel est l'utilisateur parmi ses abonnés qui se connecte à sa station de base. L'opérateur déduit de cette opération d'une part le destinataire des factures relatives aux consommations de communications téléphoniques ainsi engagées, et d'autre part le repérage par une station de base du téléphone mobile concerné de façon à pouvoir lui acheminer des appels entrants et provenant d'autres utilisateurs.

Comme deuxième opération, éventuellement préalable à la première opération, le programme 15 prévoit une composition d'un code secret PIN. Ce code PIN est d'une part traité dans les circuits de la mémoire amovible 12 pour vérifier que l'utilisateur est un utilisateur authentique du circuit amovible 12, et d'autre part cette validation peut être également transmise à l'opérateur pour lui permettre de considérer que le téléphone peut effectivement être utilisé.

Au-delà de ces fonctions de téléphonie, le téléphone mobile peut comporter des fonctions dites de confort gérées par un sous-programme 16, dit GESTION, du programme 10. Ces fonctions de confort, qui peuvent être aussi bien l'utilisation d'une calculette, l'utilisation du téléphone mobile comme un récepteur radiophonique, l'utilisation du téléphone mobile comme un annuaire, peuvent également comporter comme option de confort une option 17 dite de verrouillage du clavier, mais en fait de verrouillage de l'utilisation du téléphone mobile.

Par verrouillage du clavier on entend le fait que tant qu'une séquence correcte n'aura pas été composée d'une manière attendue avec le clavier, les séquences de touches composées avec ce dernier seront ignorées. Le programme 16 de gestion des options de confort retentit en une mémorisation dans la mémoire de données 11 du téléphone mobile (mais qui pourrait également être contenue dans la mémoire amovible 12 ou la mémoire de travail 13) des choix de l'utilisateur. Par exemple pour une option de confort 1 d'utilisation, l'utilisateur dans un fichier de personnalisation 18 aura modifié un enregistrement 19 pour le placer dans un état correspondant à son choix.

Ainsi, d'une manière connue, notamment pour l'option de verrouillage de clavier 17, il est connu des enregistrements 20 que l'utilisateur peut placer dans la mémoire de travail 13, rapide mais de type volatile. Le fonctionnement du verrouillage d'utilisation comme on le verra plus loin n'est pris en considération que si l'enregistrement 20 est dans un état 22 conduisant à ce verrouillage du clavier.

Dans l'invention, dans la mémoire 11, voire dans la mémoire 12, on a prévu un autre enregistrement 23 ayant la même fonction que l'enregistrement 20 mais possédant surtout, lors de la mise en service du téléphone mobile, au moins lors d'une première mise en service de ce dernier, un état 24 conduisant à l'utilisation du téléphone mobile avec l'option de verrouillage du clavier.

Une telle disposition a pour conséquence que, lorsque l'utilisateur met son téléphone mobile 1 en service, par exemple lorsqu'il connecte la batterie (au moins la première fois), le microprocesseur 3 va lire l'enregistrement 23, au lieu de l'enregistrement 20. Il lit l'état 24 et provoque une utilisation avec verrouillage du clavier. Au besoin l'enregistrement 23 est recopié dans l'enregistrement 20 au cours de cette mise en service.

Autrement dit, en agissant ainsi, automatiquement à la mise en service, le téléphone mobile se trouve dans un état d'utilisation de cette option. Si l'utilisateur ne veut pas disposer du verrouillage de clavier, par exemple si c'est un homme et qu'il n'est pas intéressé par une telle option, il parcourt alors le menu 16 pour aboutir à la fonction de paramétrisation 17. Il modifie alors l'état de paramétrisation de verrouillage pour le mettre dans un état correspondant à une utilisation sans verrouillage de clavier.

Deux solutions sont alors possibles. Soit on considère que l'option de verrouillage automatique de clavier ne doit convenir que pour une première mise en service. Dans ce cas, on autorise l'utilisateur de modifier l'enregistrement 23 pour valider un état 25 complémentaire de l'état 24. Dans un tel cas, la recopie de l'enregistrement 23 dans l'enregistrement 20 n'est pas nécessaire. La mémoire 11 étant de type non volatile, à la mise en service suivante, le téléphone mobile se mettra en service immédiatement dans un état avec un clavier non verrouillé.

Par contre si on veut que l'utilisation avec clavier déverrouillé ne soit valable que pour une session de mise en service, on prévoit d'une part l'enregistrement 20 dans la mémoire 21, et on modifie d'autre part l'état 22 de cet enregistrement pour le transformer en un état complémentaire 26. Ce faisant, l'état 24 sera resté actif mais le microprocesseur sera amené à consulter l'état 26. Par contre au démarrage suivant, il consultera à nouveau l'état 24 et reportera comme état actif l'état 22 (en attendant que l'utilisateur veuille à nouveau disposer d'une session d'utilisation sans verrouillage du clavier).

Le clavier 7 présente d'une manière connue un pavé numérique avec des touches de 0 à 9 ainsi que les touches # et *. Il comporte par ailleurs un navigateur avec trois touches 27 à 29. Les touches27 à 29 du navigateur servent notamment à utiliser le programme 16 de gestion des différents menus. Certains téléphones mobiles possèdent par ailleurs des touches spéciales, correspondant à des usages spécifiques. Ces touches numérotées ici 30 à 32 peuvent être affectées à des utilisations spécifiques.

Dans l'invention, compte tenu de ce que le verrouillage de clavier, ou le déverrouillage du clavier est une opération difficile à retrouver dans l'architecture des menus accessibles avec le programme 16, on prévoit de pouvoir y accéder avec un appui sur une des touches spéciales 30 à 32. Les touches spéciales 30 à 32 sont donc ainsi des touches différentes des touches du clavier numériques, des touches du navigateur ainsi que des touches 33 et 34 de prise d'appel ou de fin d'appel téléphonique.

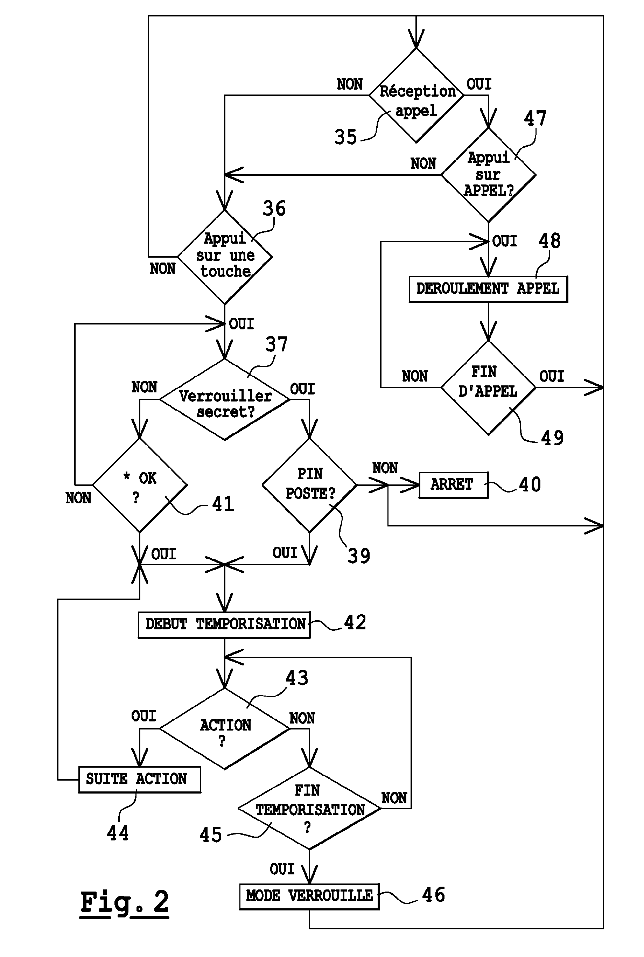

La figure 2 montre un organigramme d'opérations permettant de mettre en oeuvre automatiquement la fonction de verrouillage du clavier et les perfectionnements qu'elle engendre du fait de la modification de conception de l'appareil. Cet organigramme résulte d'un système d'exploitation du téléphone 1. Il est en permanence lancé par le microprocesseur 3. Alors qu'un test 35 constate que le téléphone mobile n'est pas en réception d'appel, un appui 36 sur une des touches du téléphone mobile est testé. Le test 35 est relancé en boucle du test 36 si tous deux sont négatifs. Dans le cas contraire, le programme 14 lance alors, selon l'invention, un test 37 pour savoir si le verrouillage et le déverrouillage des touches du clavier relèvent d'un code secret ou non. Il peut en particulier relever d'un code secret lorsqu'un utilisateur soucieux de ce que son téléphone ne puisse pas être volé prévoit que la remise en service de ce dernier ne soit provoquée que par la composition d'un code connu de lui seul. Par exemple, si une telle option a été retenue, le code à composer peut être le code PIN vu ci-dessus, ou un code POSTE relatif au téléphone mobile 1. Ce code POSTE est par exemple enregistré dans un enregistrement 38 de la mémoire 11 (ou la mémoire 12). Si tel est le cas, le test 37 conduit à un test 39 au cours duquel la comparaison d'un code composé par l'utilisateur, consécutivement à l'appui sur une touche quelconque, correspond à ce code POSTE. Si le test 39 n'est pas réussi, le programme 14 provoque un retour au test 35 ou un arrêt 40 du téléphone mobile 1 (par exemple après un certain nombre de mauvaises touches). Un tel arrêt nécessitera alors la remise en service du téléphone mobile et donc d'une manière connue la composition du code PIN ce qui sera impossible pour un utilisateur qui n'est pas l'authentique propriétaire du téléphone mobile 1. Bien entendu dans ce cas, le code à composer n'est pas affiché en clair sur l'écran.

Si l'option de verrouillage par un code secret n'est pas choisie, d'une part l'écran 8 donne de préférence une indication permanente sur le caractère verrouillé de l'utilisation et sur la séquence de touches qu'il faut composer pour déverrouiller le clavier 7. D'autre part le test 37 est suivi par un test 41 au cours duquel la séquence composée est comparée à la séquence attendue, notamment celle signalée sur l'écran 8, par exemple ici la séquence * et OK. Si cette dernière séquence n'est pas reconnue un rebouclage du test 41, voire des tests 35 à 41, sera entrepris jusqu'à ce qu'une telle séquence soit ainsi composée.

Lorsqu'elle est composée, ou lorsque le test 39 a été menée correctement à terme, dans un cas préféré, une temporisation est mise en service au cours d'une étape 42. Puis un test 43 est lancé, après l'étape 42, pour mesurer que pendant la temporisation mise en oeuvre par l'étape 42 aucune action n'est lancée avec le téléphone mobile. Une telle action peut par exemple être une simple composition d'un numéro de téléphone sur le clavier 1, voire l'appui sur une seule des touches du téléphone 1. Une telle action peut également être une consultation de la mémoire 11, voire une consultation sur un site Internet, et par exemple la visualisation sur l'écran 8 d'images ainsi reçues. La simple visualisation peut être considérée comme une action.

Le test 43 est alors suivi d'une étape 44 de suite de l'action commencée. A l'issue de l'étape 44, on relance l'étape 42 de début de temporisation, qui recommence ainsi à nouveau à zéro. Si aucune action n'est effectuée avec le téléphone mobile, alors le test 43 conduit à un test 45 de mesure de la fin de la temporisation. Par exemple une telle temporisation peut être de l'ordre d'une vingtaine de secondes, voire de plusieurs minutes, éventuellement ces durées sont réglables en choisissant l'option 17 du menu 16. Si le test 45 est négatif, il renvoie à la mesure des tests 43 de façon à ce que le test 45 ne puisse devenir positif que lorsque pendant toute la durée prévue aucune action n'a été effectuée avec le téléphone mobile. Si c'est le cas, alors le téléphone passe en mode verrouillé au cours d'une étape 46. Le mode verrouillé correspond au choix de l'utilisateur : avec composition d'un code secret de déverrouillage, qui n'est pas affiché sur l'écran 8, ou avec composition d'une séquence de touches affichées sur l'écran 8.

Il peut se présenter, avec la solution de l'invention lorsque le téléphone mobile est en clavier verrouillé, que le téléphone 1 reçoive en même temps un appel entrant. On prévoit dans l'invention, après le test 35, un test 47 pour vérifier que l'utilisateur appuie sur la touche d'acceptation d'appel 33 correspondant au décroché de la communication. Si c'est le cas, l'appel se déroule au cours d'une étape 48 et se termine par un test 49 de fin d'appel. Lorsque le test 49 détecte la fin de l'appel, selon l'invention, le téléphone mobile retourne immédiatement dans un état verrouillé. Il n'y a pas dans ce cas temporisation avant retour dans l'état verrouillé. En effet, si le téléphone a été volé, il est possible, notamment pour le localiser, de téléphoner à son détenteur qui peut être amené à se dévoiler en prenant la communication. Par contre, en faisant retourner le téléphone immédiatement en mode verrouillé, et à condition que l'option de verrouillage du clavier par un code secret ait été retenue, on neutralise (du seul fait de ce verrouillage de clavier) l'utilisation du téléphone par un utilisateur non autorisé.

Par opposition, si lors d'un appel entrant, et si lors du test 47 l'utilisateur n'appuie pas sur la bonne touche, la touche 33, on provoque selon l'invention la constatation de l'appui d'une touche selon l'étape 36 et on lance l'étape de déverrouillage avec le test 37 de verrouillage (par un code secret ou non).

## Revendications

1. Procédé de paramétrage d'un téléphone mobile dans lequel
- on munit le téléphone mobile d'une option (17) de verrouillage d'utilisation,
- on choisit (22,26) de mettre en oeuvre ou non cette option par une action,
- on enregistre (20) dans une mémoire (11) du téléphone mobile un état représentatif de ce choix,
**caractérisé en ce que**
- lors de la mise en service du téléphone, un état enregistré (23) dans une mémoire non volatile correspond (24) à un choix de mettre en oeuvre effectivement le verrouillage d'utilisation.

2. Procédé selon la revendication 1, **caractérisé en ce que**
- l'état enregistré dans la mémoire non volatile lors de la mise en service du téléphone, est un état enregistré avant une première mise en service.

3. Procédé selon l'une des revendications 1 à 2, **caractérisé en ce que** :
- dans un état verrouillé, le téléphone mobile indique sur un écran (8) une séquence de touche à composer pour déverrouiller l'utilisation.

4. Procédé selon la revendication 3, **caractérisé en ce que**
- la séquence de touche est un code (39) non affiché en clair sur l'écran.

5. Procédé selon l'une des revendications 1 à 4, **caractérisé en ce que** :
- on accède à un menu de paramétrisation du verrouillage d'utilisation du téléphone par une action unique sur une touche spéciale (30-32).

6. Procédé selon l'une des revendications 1 à 5, **caractérisé en ce que** :
- on paramètre le verrouillage d'utilisation du téléphone pour une session (20, 23) de mise en service seulement.

7. Procédé selon l'une des revendications 1 à 6, **caractérisé en ce que** lors de la réception d'un appel entrant,
- le déverrouillage (47) est automatique par appui sur une touche d'acceptation d'appel, et ou **en ce que**,
- à la fin d'une communication correspondant à un appel entrant le retour à l'état verrouillé est automatique et immédiat.

8. Procédé selon l'une des revendications 1 à 7, **caractérisé en ce que** :
- le retour à un état verrouillé après un déverrouillage est temporisé (42).

9. Procédé selon l'une des revendications 1 à 8, **caractérisé en ce que** :
- le verrouillage d'utilisation est un verrouillage de clavier.
